# EUROPEAN PATENT APPLICATION

(11) **EP 4 851 790 A1**
(43) Date of publication of application: **09.12.2026**
(21) Application number: 24928255.9
(22) Date of filing: 31.12.2024
(51) Int. Cl.: G06F 9/30

(54) **SERVICE PROCESSING APPARATUS, METHOD, AND DEVICE**

(30) Priority: 04.03.2024 CN 202410244996
(71) Applicant: HUAWEI TECHNOLOGIES CO., LTD., Shenzhen, Guangdong 518129 (CN)
(72) Inventor: DI, Qianli, Shenzhen, Guangdong 518129 (CN); SU, Fang, Shenzhen, Guangdong 518129 (CN); CHEN, Zhangqi, Shenzhen, Guangdong 518129 (CN); WANG, Zonglei, Shenzhen, Guangdong 518129 (CN); FAN, Tianqi, Shenzhen, Guangdong 518129 (CN); BI, Bo, Shenzhen, Guangdong 518129 (CN)
(74) Representative: Maiwald GmbH
(86) International application number: PCT/CN2024/144298
(87) International publication number: WO 2025/185327

(57) **Abstract**

Embodiments of this application provide a service processing apparatus and method, and a device, and relate to the field of electronic technologies, to improve running efficiency of a periodic service. The apparatus includes: at least one processing core, configured to run a first-period service in a periodic service and obtain historical running information corresponding to one or more subservices in the first-period service, where the periodic service has a plurality of periods, and the first-period service is in a first period in the plurality of periods; and a memory, configured to store the historical running information. The at least one processing core is further configured to run a second-period service in the periodic service based on the historical running information. The second-period service is in a second period in the plurality of periods. For example, the second period is adjacent to the first period.

## Description

This application claims priority to Chinese Patent Application No. 202410244996.4, filed with the China National Intellectual Property Administration on March 4, 2024 and entitled "SERVICE PROCESSING APPARATUS AND METHOD, AND DEVICE", which is incorporated herein by reference in its entirety.

### TECHNICAL FIELD

This application relates to the field of electronic technologies, and in particular, to a service processing apparatus and method, and a device.

### BACKGROUND

During service processing, to increase instructions per clock (instructions per clock, IPC) and reduce memory access latency, a processor system usually uses a plurality of speculation algorithms, for example, a branch prediction algorithm corresponding to instruction speculation and a prefetch algorithm corresponding to address speculation. However, the foregoing speculation algorithms are limited by currently obtained hardware information and cannot meet requirements of both accuracy and coverage, and invalid speculation causes a waste of performance and power consumption of the processor system. Therefore, effects of the foregoing plurality of speculation algorithms are poor.

### SUMMARY

This application provides a service processing apparatus and method, and a device, to improve running efficiency of a periodic service.

To achieve the foregoing objectives, the following technical solutions are used in embodiments of this application.

According to a first aspect, a service processing apparatus is provided. The apparatus includes: at least one processing core, configured to run a first-period service in a periodic service and obtain historical running information corresponding to one or more subservices (for example, calling a specific function, accessing a specific address, accessing specific data, or executing a specific branch) in the first-period service, where the periodic service has a plurality of periods, for example, the periodic service may be a periodic image processing or image display service (for example, a frame drawing service involved in image display), or a periodic transmission service or scheduling service, and the first-period service is in a first period in the plurality of periods; and a memory, configured to store the historical running information. The at least one processing core is further configured to run a second-period service in the periodic service based on the historical running information, for example, run the second-period service by using the historical running information as prefetch information, where the second-period service is in a second period in the plurality of periods.

In the foregoing technical solution, the at least one processing core may be configured to run the first-period service in the periodic service and obtain the historical running information corresponding to the one or more subservices, the memory may be configured to store the historical running information, and the at least one processing core may be further configured to run the second-period service in the periodic service based on the historical running information, where the first-period service and the second-period service are respectively in the first period and the second period in the plurality of periods. Different periods of the periodic service are similar, so that the memory stores the historical running information corresponding to the one or more subservices in the first-period service, and the at least one processing core obtains required running information from the memory when running the second-period service, thereby reducing a cache miss rate of the at least one processing core during processing of the second-period service, improving prediction accuracy and IPC (instructions per clock), and improving running efficiency of the periodic service.

In a possible implementation of the first aspect, the second period is adjacent to the first period. For example, the first-period service and the second-period service are services of two adjacent frames in a frame drawing service. In the foregoing possible implementation, when the second period is adjacent to the first period, the first-period service is more similar to the second-period service. In this way, when the second-period service runs based on the historical running information corresponding to the one or more subservices in the first-period service, running efficiency of the periodic service can be further improved.

In a possible implementation of the first aspect, each of the plurality of periods includes at least one of the following: a transmission time interval TTI, a frame, or a time slice. In the foregoing possible implementation, when each of the plurality of periods is a TTI, a frame, or a time slice, running efficiency of the periodic service corresponding to the foregoing different periods can be improved.

In a possible implementation of the first aspect, the first-period service and the second-period service include the one or more same subservices, for example, include the same function call, address access, data access, or branch. In the foregoing possible implementation, when the first-period service and the second-period service include the one or more same subservices, and the at least one processing core obtains the historical running information of the one or more subservices, the second-period service runs based on the historical running information, so that prediction accuracy can be further improved, thereby further improving running efficiency of the periodic service.

In a possible implementation of the first aspect, the at least one processing core is further configured to determine the one or more subservices in the periodic service. For example, the at least one processing core may be configured to mark the one or more subservices in the periodic service. In the foregoing possible implementation, the one or more subservices in the periodic service are determined, and the historical running information of the one or more subservices in the first-period service is used as prefetch information of the second-period service when the periodic service runs, thereby improving accuracy and coverage of speculation.

In a possible implementation of the first aspect, the historical running information includes at least one of the following: branch history information, an instruction trace, a data trace, cache cold/hot information, page table history information, or quality of service QoS information. In the foregoing possible implementation, when the historical running information includes the foregoing different information, accuracy and coverage of branch prediction, accuracy and coverage of data prefetch, accuracy and coverage of instruction prefetch, cache utilization, a page table hit rate, and the like can be improved during processing of the periodic service.

In a possible implementation of the first aspect, the memory includes at least one of the following: an on-chip dedicated memory, an on-chip shared cache, or an off-chip memory. The foregoing possible implementation can improve diversity and selection flexibility of the memory.

According to a second aspect, a service processing apparatus is provided. The apparatus includes: a service execution unit, configured to drive at least one processing core to run a first-period service in a periodic service and obtain historical running information corresponding to one or more subservices in the first-period service, where the periodic service has a plurality of periods, and the first-period service is in a first period in the plurality of periods; and a storage unit, configured to store the historical running information in a memory. The service execution unit is further configured to drive the at least one processing core to run a second-period service in the periodic service based on the historical running information, where the second-period service is in a second period in the plurality of periods. The second period is adjacent to the first period.

In a possible implementation of the second aspect, each of the plurality of periods includes at least one of the following: a transmission time interval TTI, a frame, or a time slice.

In a possible implementation of the second aspect, the first-period service and the second-period service include the one or more same subservices.

In a possible implementation of the second aspect, the apparatus further includes: a scheduling unit, configured to determine the one or more subservices in the periodic service.

In a possible implementation of the second aspect, the scheduling unit is further configured to generate configuration information, where the configuration information is used to allocate storage space in the memory to the periodic service; and the storage unit is further configured to store the historical running information in the storage space based on the configuration information.

In a possible implementation of the second aspect, the scheduling unit is further configured to: when the second-period service is switched from a first processing core to a second processing core, send indication information to the service execution unit, where the indication information indicates the storage space; and the service execution unit is configured to drive, based on the indication information, the second processing core to obtain the historical running information from the storage space.

In a possible implementation of the second aspect, the scheduling unit is further configured to release the storage space when processing of the periodic service is completed.

In a possible implementation of the second aspect, the historical running information includes at least one of the following: branch history information, an instruction trace, a data trace, cache cold/hot information, page table history information, or quality of service QoS information.

In a possible implementation of the second aspect, the memory includes at least one of the following: an on-chip dedicated memory, an on-chip shared cache, or an off-chip memory.

According to a third aspect, a service processing method is provided. The method includes: running a first-period service in a periodic service and obtaining historical running information corresponding to one or more subservices in the first-period service, where the periodic service has a plurality of periods, and the first-period service is in a first period in the plurality of periods; storing the historical running information in a memory; and running a second-period service in the periodic service based on the historical running information, where the second-period service is in a second period in the plurality of periods. Optionally, the second period is adjacent to the first period.

In a possible implementation of the third aspect, each of the plurality of periods includes at least one of the following: a transmission time interval TTI, a frame, or a time slice.

In a possible implementation of the third aspect, the first-period service and the second-period service include the one or more same subservices.

In a possible implementation of the third aspect, the method further includes: determining the one or more subservices in the periodic service.

In a possible implementation of the third aspect, the method further includes: generating configuration information, where the configuration information is used to allocate storage space in the memory to the periodic service. Storing the historical running information in the memory includes: storing the historical running information in the storage space based on the configuration information.

In a possible implementation of the third aspect, the method further includes: when the second-period service is switched from a first processing core to a second processing core, sending indication information to the second processing core, where the indication information indicates the storage space; and obtaining, by the second processing core, the historical running information from the storage space based on the indication information. Therefore, running the second-period service in the periodic service based on the historical running information includes: The second processing core runs the second-period service in the periodic service based on the historical running information.

In a possible implementation of the third aspect, the method further includes: releasing the storage space when processing of the periodic service is completed.

In a possible implementation of the third aspect, the at least one piece of historical running information includes at least one of the following: branch history information, an instruction trace, a data trace, cache cold/hot information, page table history information, or quality of service QoS information.

In a possible implementation of the third aspect, the memory includes at least one of the following: an on-chip dedicated memory, an on-chip shared cache, or an off-chip memory.

According to a fourth aspect, an electronic device is provided. The electronic device includes a processor and a memory, the memory is configured to store computer instructions, and the processor is configured to execute the computer instructions, so that the electronic device implements the service processing method according to any one of the third aspect or the possible implementations of the third aspect.

According to a fifth aspect, a readable storage medium is provided. The readable storage medium stores computer instructions, and when the computer instructions are run on a device, the device is enabled to perform the service processing method according to any one of the third aspect or the possible implementations of the third aspect.

According to a sixth aspect, a computer program product is provided. The computer program product includes computer instructions, and when the computer instructions are run on a device, the device is enabled to perform the service processing method according to any one of the third aspect or the possible implementations of the third aspect.

It may be understood that, for beneficial effects that can be achieved in the second aspect to the sixth aspect, correspondingly refer to the beneficial effects provided in any one of the first aspect or the possible implementations of the first aspect. Details are not described herein again.

### BRIEF DESCRIPTION OF DRAWINGS

FIG. 1 is a diagram of a processing behavior corresponding to drawing of each of a plurality of frames;
FIG. 2 is a diagram of a structure of a processor system according to an embodiment of this application;
FIG. 3 is a diagram of a software structure of an electronic device according to an embodiment of this application;
FIG. 4 is a diagram of a structure of a service processing apparatus according to an embodiment of this application;
FIG. 5 is a schematic flowchart of a service processing method according to an embodiment of this application;
FIG. 6 is a diagram of a plurality of periods of a periodic service according to an embodiment of this application;
FIG. 7 is a diagram of obtaining and storing historical running information according to an embodiment of this application;
FIG. 8 is a diagram of processing a periodic service according to an embodiment of this application;
FIG. 9 is a schematic flowchart of another service processing method according to an embodiment of this application;
FIG. 10 is a diagram of a structure of a memory according to an embodiment of this application;
FIG. 11 is a flowchart of software during service processing according to an embodiment of this application;
FIG. 12 is a diagram of a structure of another service processing apparatus according to an embodiment of this application; and
FIG. 13 is a diagram of a structure of an electronic device according to an embodiment of this application.

### DESCRIPTION OF EMBODIMENTS

The making and use of embodiments are discussed in detail below. It should be appreciated, however, that many applicable inventive concepts provided in this application may be implemented in a plurality of specific environments. The specific embodiments discussed are merely illustrative of specific ways to implement and use this application and this technology, and do not limit the scope of this application.

Unless otherwise defined, all technical terms used herein have the same meaning as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not opened), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "at least one" means one or more, and "a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. A character "/" generally indicates an "or" relationship between the associated objects. In addition, "at least one of the following items (pieces)" or a similar expression thereof means any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

In embodiments of this application, words such as "first" and "second" are used to distinguish between objects with similar names or functions or effects. A person skilled in the art may understand that the words such as "first" and "second" do not limit a quantity and an execution sequence. A term "coupling" is used for representing an electrical connection, including a direct connection through a wire or a connection end or an indirect connection through another device. Therefore, "coupling" should be considered as a generalized electronic communication connection.

It should be noted that, in this application, a word such as "example" or "for example" indicates an example, an instance, or a description. Any embodiment or design scheme described as an "example" or "for example" in this application should not be explained as being more preferred or having more advantages than another embodiment or design scheme. Instead, use of the word such as "example" or "for example" is intended to present a related concept in a specific manner.

Before embodiments of this application are described below, a related technical background of this application is first described.

During service processing, to increase instructions per clock (instructions per clock, IPC) and reduce memory access latency, a processor system usually uses a plurality of speculation algorithms, for example, a branch prediction algorithm corresponding to instruction speculation and a prefetch algorithm corresponding to address speculation. However, the foregoing speculation algorithms are usually limited by currently obtained hardware information and cannot meet requirements of both accuracy and coverage, and invalid speculation causes a waste of performance and power consumption of the processor system. In addition, a same service is frequently migrated between different processing cores (or referred to as cores or processor cores). In this case, a cache and a history table cannot be retained, resulting in large switching costs and also hindering processing performance and user experience.

The foregoing coverage and accuracy are two indicators for evaluating performance of the processor system using a speculation algorithm. The coverage is a percentage of all data used by a processing core that is prefetched to a cache, and the higher the coverage is, the better. The accuracy is a proportion of prefetched data accessed by a processing core in all prefetched data, and the higher the accuracy is, the better. If the accuracy is too low, useless prefetched data pollutes a cache and occupies a memory bandwidth.

In addition, a current processor architecture usually uses a benchmark (benchmark) as a design objective, leaving room for optimization for a real service scenario. For example, a processor cache size (cache size) and a branch target buffer (branch target buffer, BTB) size (BTB size) are set based on a benchmark sweet spot (or referred to as a benefit point). Actually, a real service requirement is higher than a designed size. However, simply increasing the size can improve performance but brings large power, performance, and area (power, performance, and area, PPA) costs. Therefore, processor optimization for a real service requires a new perspective to review its characteristics and accordingly design a processor architecture.

Currently, for a service having rhythm information (or referred to as a periodic service having a plurality of periods), for example, an image-related task with a frame (frame) as a period, or a control service or scheduling service with a transmission time interval (transmission time interval, TTI) or a time slice as a period, there is a problem of low speculation efficiency in the foregoing technical background. In addition, the rhythm information is not transferred between software and hardware in a conventional processor and consequently cannot be effectively used, causing low running efficiency of this type of service.

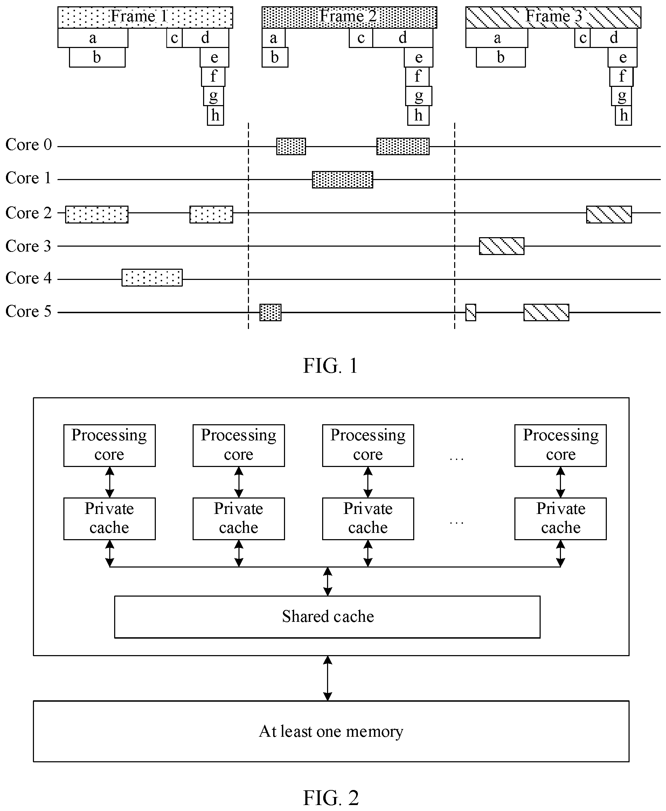

For example, in an end-user scenario, frame drawing is a type of service with a high proportion. For this type of service, all visual information received by a user comes from a screen, and screen display is performed by frames. Therefore, a large part of tasks processed by a processor in a user terminal are executed for a purpose of "displaying an image frame", and other tasks include user feedback receiving, a service, and the like. To "display an image frame", some tasks are directly related to display, and some other tasks indirectly support display of each frame. All these belong to the optimization scope of this application. For the processor in the user terminal, a running entity of this type of service is usually a render thread (render thread) and a display compositor thread (surface flinger) in a processing core, and processing behaviors corresponding to the render thread and the display compositor thread in different frames are similar, that is, this type of service shows a very strong inter-frame similarity. FIG. 1 shows a processing behavior corresponding to each frame when a plurality of processing cores draw a plurality of frames of this type of service, and a processing core involved in drawing each frame. In the figure, an example in which the plurality of frames include a frame 1, a frame 2, and a frame 3, the processing behavior corresponding to each frame includes a, b, c, d, e, f, g, and h, and the plurality of processing cores include a core 0 to a core 5 is used for description, and a rectangle on a straight line corresponding to each core in the figure indicates that a render thread and a display compositor thread in the core are in a running state.

Based on this, an embodiment of this application provides a service processing apparatus, which may be configured to process a periodic service having a plurality of periods. The service processing apparatus includes at least one processing core and a memory. In the service processing apparatus, the at least one processing core may be configured to run a first-period service in a periodic service and obtain historical running information corresponding to one or more subservices in the first-period service, the memory may be configured to store the historical running information, and the at least one processing core may be further configured to run a second-period service in the periodic service based on the historical running information, where the first-period service and the second-period service are respectively in a first period and a second period in the plurality of periods. In this way, the memory stores the historical running information corresponding to the one or more subservices in the first-period service, and the at least one processing core obtains required running information from the memory when running the second-period service, thereby reducing a cache miss rate of the at least one processing core during processing of the second-period service, improving prediction accuracy and IPC (instructions per clock), and improving running efficiency of the service.

The service processing apparatus provided in this embodiment of this application may be used in a processor system. The processor system may also be referred to as a processor subsystem. For example, the processor subsystem may be a CPU subsystem. The following describes a structure of the processor system by using an example.

FIG. 2 is a diagram of a structure of a processor system according to an embodiment of this application. The processor system includes at least one processing core, each processing core may be correspondingly provided with a private cache (for example, a level-1 cache and a level-2 cache), private caches of different processing cores may be coupled to a shared cache (for example, a level-3 cache) through a bus, and different processing cores in the plurality of processing cores can all access the shared cache. The plurality of processing cores may be configured to deploy a periodic service. Services in different periods in the periodic service may have one or more same subservices. The one or more subservices may include calling one or more functions, accessing data, accessing an instruction, and/or the like in a running process.

In the processor system, the plurality of processing cores may include a plurality of different processing cores of a same processor, or the plurality of processing cores include processing cores of a plurality of different processors, that is, the plurality of processing cores may form one or more processors. The processor includes but is not limited to a CPU, a general-purpose processor, a graphics processing unit (graphics processing unit, GPU), an image signal processor (image signal processor, ISP), a digital signal processor (digital signal processor, DSP), a network processing unit (network processing unit, NPU), an artificial intelligence (artificial intelligence, AI) processor, and the like. Optionally, structures and sizes of respective hardware resources (for example, cache resources) of any two of the plurality of processing cores may be the same or different. This is not specifically limited in embodiments of this application.

The processor system further includes at least one memory coupled to the plurality of processing cores. The at least one memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For example, the RAM may be a static random access memory (static RAM, SRAM), a dynamic random access memory (dynamic random access memory, DRAM), a synchronous dynamic random access memory (synchronous DRAM, SDRAM), or a double data rate synchronous dynamic random access memory (double data rate SDRAM, DDR SDRAM). In a possible embodiment, the at least one memory includes at least one of the following: a dedicated memory or an external memory. For example, the dedicated memory may be an on-chip dedicated memory, and the external memory may be an off-chip memory.

The processor system may be an electronic device, or a system on a chip (system on a chip, SoC) used in an electronic device, or a chipset including a plurality of chips, or a module including a SoC or a chipset. The electronic device may serve as a terminal device or a server. Optionally, the electronic device includes but is not limited to a mobile phone, a tablet computer, a notebook computer, a desktop computer, a palmtop computer, an ultra-mobile personal computer (ultra-mobile personal computer, umPC), a mobile internet device (mobile internet device, MID), a netbook, a video camera, a camera, a wearable device (for example, a smart watch or a smart band), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or an electric meter), a smart robot, a workshop device, a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a flight device (for example, a smart robot, a hot air balloon, an uncrewed aerial vehicle, or an airplane), and the like.

A software system of the electronic device may use a layered architecture, an event-driven architecture, a microkernel architecture, a microservice architecture, or a cloud architecture. In embodiments of this application, an Android (Android) system with a layered architecture is used as an example to describe the software structure of the electronic device.

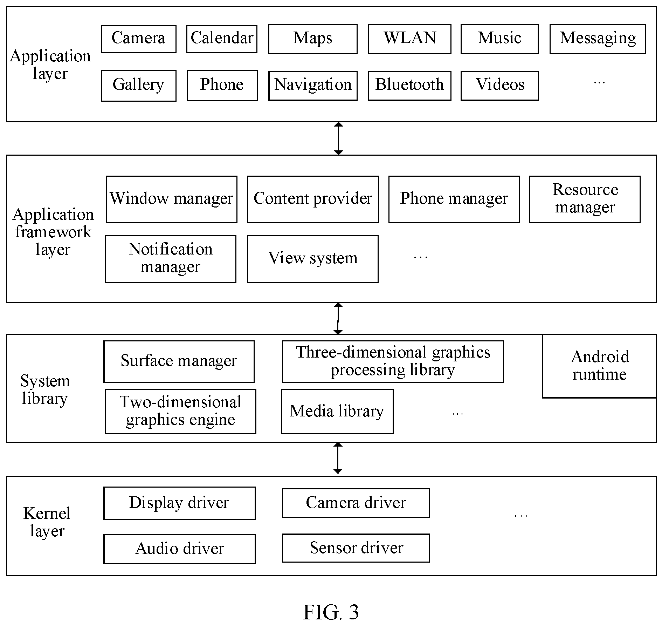

FIG. 3 is a diagram of a software structure of an electronic device according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. In a possible example, the application packages may include applications such as Camera, Gallery, Calendar, Phone, Maps, Navigation, Wireless local area network (wireless local area network, WLAN), Bluetooth, Music, Videos, and Messaging.

The application framework layer provides an application programming interface (application programming interface, API) and a programming framework for applications at the application layer. The application framework layer includes some predefined functions. In a possible example, the application framework layer may include a window manager, a content provider, a view system, a phone manager, a resource manager, a notification manager, and the like. The window manager is configured to manage a window program. For example, the window manager may obtain a size of a display, determine whether there is a status bar, perform screen locking, take a screenshot, and the like. The content provider is configured to: store and retrieve data, and enable the data to be accessed by an application. For example, the data includes a video, an image, audio, calls that are made and answered, a browsing history, a bookmark, and an address book. The view system includes visual controls such as a control for displaying a text and a control for displaying a picture, and the view system may be configured to construct an application. A display interface may include one or more views. For example, a display interface including an SMS message notification icon may include a view for displaying a text and a view for displaying a picture. The phone manager is configured to provide a communication function of the electronic device, for example, management of a call status (including answering, declining, or the like). The resource manager provides an application with various resources, such as a localized character string, an icon, a picture, a layout file, and a video file. The notification manager enables an application to display notification information in a status bar, and may be configured to convey a notification type message. The notification manager may automatically disappear after a short pause without requiring user interaction. For example, the notification manager is configured to notify download completion and give a message notification. The notification manager may alternatively be a notification that appears in a top status bar of the system in a form of a graph or a scroll bar text, for example, a notification for an application running in the background, or may be a notification that appears on the screen in a form of a dialog window. For example, text information is prompted in the status bar, a prompt tone is played, the electronic device vibrates, or an indicator blinks.

The Android runtime is responsible for scheduling and management of the Android system, and the Android runtime may include a kernel library and a virtual machine. The kernel library includes two parts: a function that needs to be called in Java language and a kernel library of Android. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a two-dimensional graphics engine (for example, SGL). The surface manager is configured to manage a display subsystem and provide fusion of two-dimensional and three-dimensional layers for a plurality of applications. The media library supports playback and recording in a plurality of commonly used audio and video formats, static image files, and the like. The media library may support a plurality of audio and video coding formats such as MPEG-4, H.264, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing.

As a layer between hardware and software, the kernel layer is an internal core program of an operating system, and may also be referred to as an operating system kernel. The kernel layer may be configured to provide an interface for a program to access system hardware. For example, the hardware includes a memory, a graphics card, and some external devices. In a possible embodiment, the kernel layer includes at least a display driver, a camera driver, an audio driver, a sensor driver, and the like.

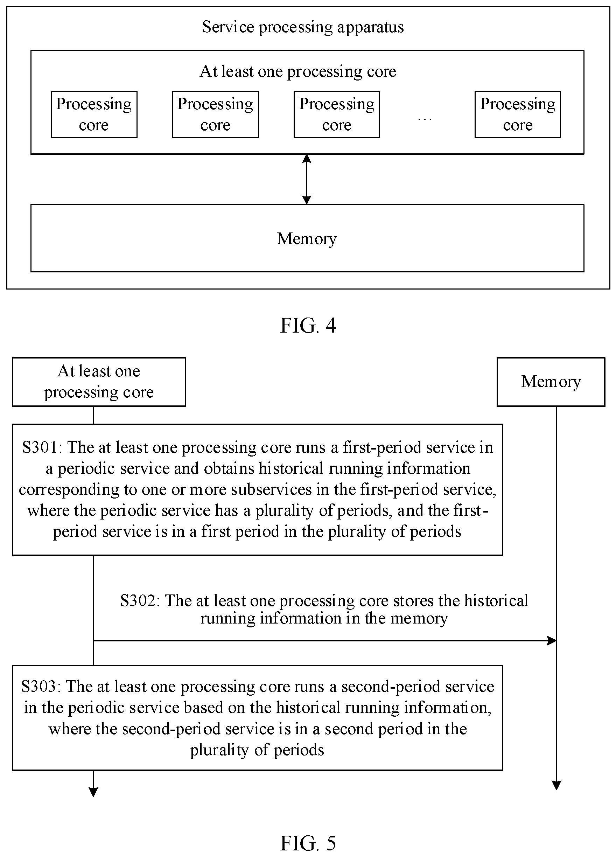

FIG. 4 is a diagram of a structure of a service processing apparatus according to an embodiment of this application. The service processing apparatus is used in the processor system provided above. The service processing apparatus includes at least one processing core and a memory. When the at least one processing core is a plurality of processing cores, the plurality of processing cores may share the memory. FIG. 5 is a schematic flowchart of a service processing method according to an embodiment of this application. The method may be performed by the service processing apparatus shown in FIG. 4. The method includes the following steps.

S301: The at least one processing core runs a first-period service in a periodic service and obtains historical running information corresponding to one or more subservices in the first-period service, where the periodic service has a plurality of periods, and the first-period service is in a first period in the plurality of periods.

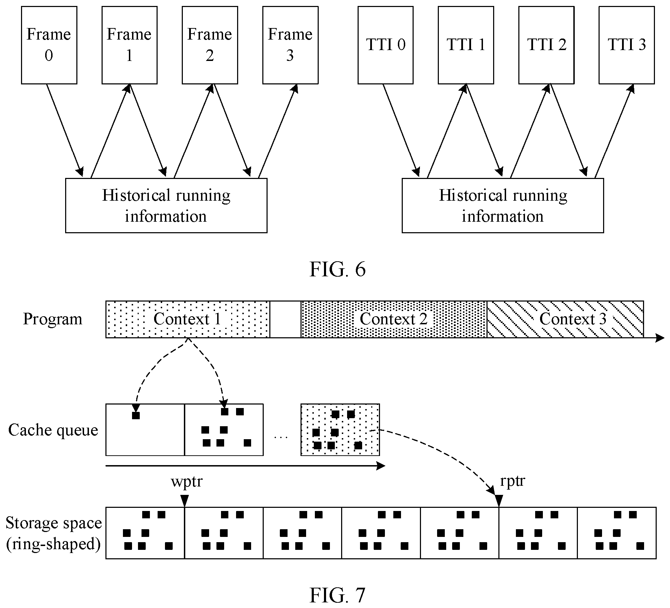

The periodic service may be a service having a plurality of periods, and each of the plurality of periods includes at least one of the following: a transmission time interval TTI in communication, a frame in a video image, or a time slice in operating system scheduling. FIG. 6 is a diagram showing the plurality of periods of the periodic service by using an example in which each of the plurality of periods is separately a frame and a TTI. The plurality of periods may be represented as a frame 0 to a frame 3 or a TTI 0 to a TTI 3. In a possible example, the periodic service may be an image-related task with a frame as a period, a communication transmission service with a TTI as a period, a control service with a time slice as a period, a scheduling service with a TTI as a period, a scheduling service with a time slice as a period, or the like. The TTI may be a subframe, a slot, or another time unit in communication. The time slice may be a time scheduling unit in an operating system or an operating system kernel. The time slice may be an allowed running time that is allocated by the operating system or the operating system kernel to a program (or referred to as a thread running the program) at a time, that is, a time for running the program each time is a time slice, and a time slice allocated to the program may be used to run a part of the program.

In addition, the one or more subservices may be one or more service segments or program segments included in the periodic service. In a possible example, the one or more subservices may include at least one of the following: calling a specific function, accessing a specific address, accessing specific data, executing a specific branch, or the like.

In a possible embodiment, the historical running information (or referred to as metadata (metadata)) corresponding to the one or more subservices includes at least one of the following: branch history information, an instruction trace, a data trace, cache cold/hot information, page table history information, or quality of service (quality of service, QoS) information. The branch history information is related information of an executed branch. For example, the related information may include an address and jump information of the branch. The address includes a source address and a destination address, and the source address and the destination address form an address pair. The jump information may include a jump direction and a jump destination, the jump direction indicates a jump direction (that is, jump or non-jump) of a jump instruction, and the jump destination is a destination address after the jump. The instruction trace indicates a track of an accessed instruction, and may also be referred to as instruction memory access history information. The data trace indicates a track of accessed data, and may also be referred to as data memory access history information. The cache cold/hot information indicates a cold/hot degree of data and/or instructions in a cache (for example, a level-1 cache, a level-2 cache, and a level-3 cache). The page table history information indicates a correspondence between a virtual address and a physical address corresponding to data and/or instructions accessed. The QoS information indicates information such as a scheduling policy recommended based on QoS in a scheduling process.

Before the at least one processing core runs the first-period service, the at least one processing core may further determine the one or more subservices in the periodic service, that is, determine specific subservices that can be applied to the solution of this embodiment. The one or more subservices in the periodic service may be specifically determined by software running on the at least one processing core. For example, the software may be an operating system kernel.

In a possible embodiment, an operating system kernel running on the at least one processing core may mark the one or more subservices in the periodic service. For example, the operating system kernel adds mark information to a start location and an end location of a program segment corresponding to the one or more subservices in the periodic service, to mark the one or more subservices in the periodic service. Then, the operating system kernel may deliver the periodic service that carries the mark information to the at least one processing core, so that the at least one processing core obtains the historical running information corresponding to the one or more subservices in the first-period service when running the first-period service in the periodic service.

S302: The at least one processing core stores the historical running information in the memory.

When the at least one processing core obtains the historical running information of the one or more subservices in the first-period service, the at least one processing core may store the historical running information in the memory. Optionally, the memory includes at least one of the following: an on-chip dedicated memory, an on-chip shared cache, or an off-chip memory. For example, the on-chip shared cache may be a level-3 cache, the off-chip memory may be a memory or a main memory, and the on-chip dedicated memory may be a level-1 cache, a level-2 cache, or storage space dedicated to some specific services including this service.

Optionally, storage space for storing the historical running in the memory may be allocated by the operating system kernel running on the at least one processing core. In a possible embodiment, before running the periodic service, the operating system kernel may generate configuration information, and send the configuration information to the at least one processing core at a hardware layer, where the configuration information is used to allocate storage space in the memory to the periodic service; and when receiving the configuration information, the at least one processing core stores the historical running information in the storage space in the memory based on the configuration information. For example, the configuration information may include a start address and an end address of the storage space, or include either of a start address and an end address of the storage space, a capacity of the storage space, and the like. The address included in the configuration information may be a virtual address.

Further, after the at least one processing core obtains the historical running information, the at least one processing core may output the historical running information to the memory by using a cache queue (or referred to as a historical queue). The cache queue may be used to receive the historical running information and filter out repeated information in the historical running information, for example, filter out a repeated address in the historical running information and then send the historical running information to the memory. The cache queue may be a multiple-in-one-out cache queue, and may be further used to balance a bandwidth difference between input and output in addition to being used to filter out the repeated information, to improve transmission efficiency of the historical running information.

For example, as shown in FIG. 7, it is assumed that the one or more subservices include a subservice 0, a subservice 1, and a subservice 2, and in a process in which a first processing core runs a program corresponding to the first-period service and runs to context 1, context 2, and context 3 respectively corresponding to the subservice 0, the subservice 1, and the subservice 2, the first processing core obtains historical running information of the subservice 0, the subservice 1, and the subservice 2, filters the historical running information by using a cache queue, and then stores the historical running information in the storage space. The storage space may be of a ring-shaped storage structure.

S303: The at least one processing core runs a second-period service in the periodic service based on the historical running information, where the second-period service is in a second period in the plurality of periods.

The second period is after the first period, that is, the second-period service runs after the first-period service. Optionally, an interval between the second period and the first period is less than a preset period quantity, that is, the interval between the second period and the first period is short. For example, the second period is adjacent to the first period, that is, is a next period of the first period.

In a possible embodiment, when the periodic service includes the first-period service in the first period and the second-period service in the second period, and the second period is adjacent to the first period, the at least one processing core may obtain the historical running information from the memory in a process of running the second-period service, and run the second-period service based on the historical running information, for example, run the second-period service by using the historical running information as prefetch information.

The prefetch information may be information obtained in advance before a service runs and required for running the service. For example, the information includes instructions and/or data. Using the historical running information as prefetch information may refer to writing the historical running information into a hardware prefetcher of a currently running processing core for sending by the hardware prefetcher to a level-1 cache, a level-2 cache, or a level-3 cache based on policy settings after processing such as cache and address translation, that is, filling information such as instructions and/or data to be used in the future into a corresponding cache in advance. Then, the second-period service runs based on the information such as the instructions and/or data in the cache, to improve running efficiency of the second-period service.

Optionally, the first-period service and the second-period service include the one or more same subservices. In a possible embodiment, when the at least one processing core is configured to run the periodic service, the operating system kernel running on the at least one processing core may determine, before running the periodic service, that the first-period service and the second-period service include the one or more same subservices. Then, the at least one processing core may determine to run the periodic service according to the method in this application.

Optionally, when a service running on the at least one processing core is not a periodic service, or when a service running on the at least one processing core is a periodic service but services in different periods in the periodic service do not include one or more same subservices, the operating system kernel may not add mark information to the periodic service. In this case, the at least one processing core performs an operation based on a procedure in the conventional technology, that is, the at least one processing core does not obtain the historical running information of the one or more subservices in a service running process. In other words, the operating system kernel may automatically determine whether the first-period service and the second-period service include the one or more same subservices (that is, automatically determine whether this belongs to a benefit scenario), thereby avoiding accidental trigger of an improper operation and a negative benefit in a non-target scenario.

When the first-period service and the second-period service include the one or more same subservices, in a process of running the second-period service, the at least one processing core uses, as prefetch information, the historical running information of the one or more subservices obtained from the first-period service, to run the second-period service, thereby greatly reducing a cache miss rate during processing of the second-period service, improving prediction accuracy and IPC, and improving running efficiency of the periodic service.

Beneficial effects that can be achieved by the method when the historical running information includes different information are described below by using an example. Specifically, if the historical running information includes branch history information, the at least one processing core uses the branch history information as prefetch information to guide branch prediction during running of the second-period service, thereby improving accuracy and coverage of branch prediction during processing of the second-period service. If the historical running information includes data memory access history information, the at least one processing core uses the data memory access history information as prefetch information to guide data prefetch during running of the second-period service, thereby improving accuracy and coverage of data prefetch during processing of the second-period service. If the historical running information includes instruction memory access history information, the at least one processing core uses the instruction memory access history information as prefetch information to guide instruction prefetch during running of the second-period service, thereby improving accuracy and coverage of instruction prefetch during processing of the second-period service. If the historical running information includes cold data history information, the at least one processing core uses the cold data history information as prefetch information to guide cache replacement during running of the second-period service, thereby improving cache utilization during processing of the second-period service. If the historical running information includes page table miss history information, the at least one processing core uses the page table miss history information as prefetch information to guide page table prefetch during running of the second-period service, thereby improving a page table hit rate during processing of the second-period service.

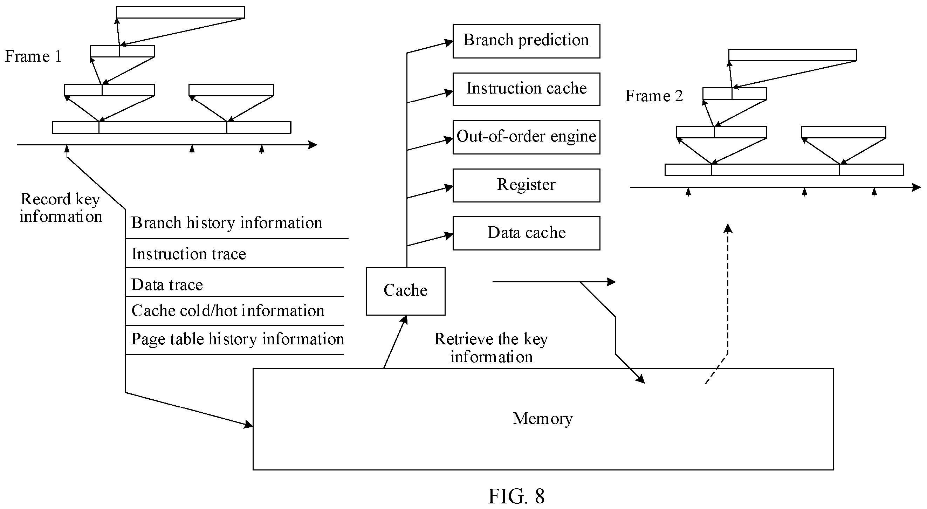

For example, as shown in FIG. 8, it is assumed that the periodic service is a frame drawing service and includes drawing of a frame 1 and a frame 2, the frame 2 is a next frame of the frame 1, and a first processing core in the at least one processing core is configured to run the frame drawing service. In this case, the first processing core obtains historical running information of a plurality of marked subservices (or referred to as recording key information) during drawing of the frame 1. For example, the historical running information includes branch history information, an instruction trace, a data trace, cache cold/hot information, and page table history information. The first processing core stores the obtained historical running information in the storage space of the memory; and then the first processing core obtains the historical running information from the memory, and uses the historical running information as prefetch information for drawing the frame 2, for example, caches corresponding information in the historical running information into a branch prediction buffer, an instruction cache, an out-of-order engine, a register, a data cache, and the like. In other words, when drawing the frame 2, the first processing core may extract stored key information to draw the frame 2, thereby improving drawing efficiency of the frame 2, and achieving a performance benefit.

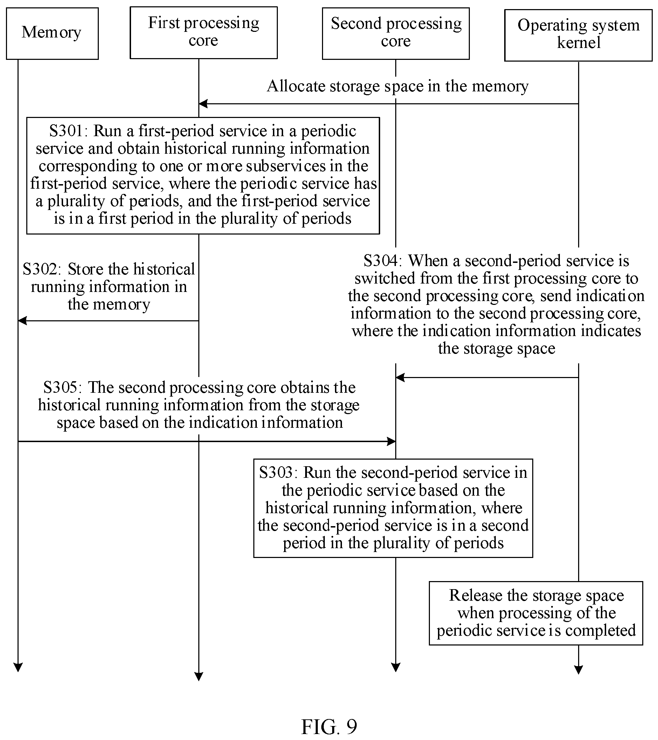

If the periodic service is migrated between different processing cores in the at least one processing core, that is, the periodic service encounters inter-core migration (or referred to as inter-core switching), with reference to FIG. 5, as shown in FIG. 9, the method further includes S304 and S305.

S304: When the second-period service is switched from a first processing core to a second processing core, the operating system kernel sends indication information to the second processing core, where the indication information indicates the storage space.

In a possible embodiment, the at least one processing core includes the first processing core and the second processing core. If the periodic service is migrated from the first processing core to the second processing core after the first processing core completes running of the first-period service in the periodic service, that is, when the second processing core runs the second-period service in the periodic service, the operating system kernel may send the indication information to the second processing core, where the indication information may indicate the storage space for storing the historical running information of the one or more subservices in the memory.

S305: The second processing core obtains the historical running information from the storage space based on the indication information.

In a possible embodiment, in a process in which the second processing core runs the second-period service, when receiving the indication information sent by the operating system kernel, the second processing core may obtain the historical running information from the storage space based on the indication information, and run the second-period service by using the historical running information as prefetch information.

Optionally, the indication information may be further used for a storage address of historical running information that currently needs to be read. For example, the indication information further indicates a read pointer, and the read pointer may also be referred to as a read address offset value. When the second processing core receives the indication information, the second processing core may determine, based on the read pointer and the start address of the storage space, a storage address that currently needs to be read, to obtain corresponding historical running information from the storage space based on the storage address.

Further, in a process of running the second-period service, the second processing core may also obtain the historical running information of the one or more subservices in the second-period service, and update, based on the historical running information, historical running information stored in the storage space, to provide more accurate, comprehensive, and fresh historical running information for running of a subsequent period in the periodic service.

Optionally, the second processing core may store the historical running information of the one or more subservices in the second-period service in the storage space by using a write pointer. The write pointer may also be referred to as a write address offset value. A length between the write pointer and the read pointer may be fixed, and may be specifically set based on an actual requirement. This is not specifically limited in embodiments of this application.

In a possible example, with reference to FIG. 7, the storage space may be of a ring-shaped storage structure, the ring-shaped storage structure may also be referred to as a naturally wound storage structure, and information stored in the storage structure may be naturally refreshed through continuous write. In this way, in a process of running the second-period service, the second processing core may read the historical running information of the one or more subservices in the first-period service from the storage space while storing the historical running information of the one or more subservices in the second-period service in the storage space. In the figure, the read pointer is represented as rptr, and the write pointer is represented as wptr.

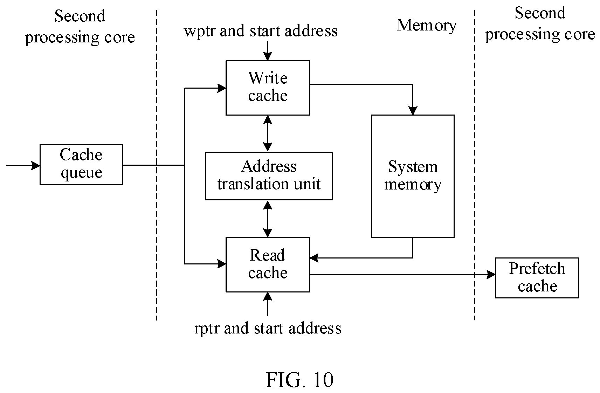

In another possible example, as shown in FIG. 10, the memory may include a write cache, a read cache, an address translation unit, and a system memory. Both the write cache and the read cache are coupled to the address translation unit and the system memory. The foregoing storage space is specifically storage space in the system memory. The following uses write and read of the second processing core as an example to describe a working process of the memory.

Specifically, when the second processing core needs to write first historical running information, the second processing core may place the first historical running information in a cache queue of the second processing core. When the first historical running information is evicted (evict) from the cache queue, the first historical running information enters the write cache of the memory, the write cache determines a first virtual address of a first historical running queue based on a write pointer wptr corresponding to the first historical running information and a start address of the storage space, a first physical address corresponding to the first virtual address is obtained through the address translation unit, and then the first historical running information is stored in the system memory based on the first physical address. When an eviction occurs in the cache queue of the second processing core or a level-1 cache miss occurs in the second processing core, the second processing core may determine a second virtual address based on a read instruction rptr and the start address of the storage space, obtain a second physical address corresponding to the second virtual address through the address translation unit, then read second historical running information from the system memory based on the second physical address, and store the second historical running information in a prefetch cache as prefetch information.

The following describes structures and features of the foregoing different components by using examples. For example, the foregoing cache queue is a table storage structure, a corresponding capacity may be 4 KB and may be used to store an instruction, data, and/or the like, the cache queue may trigger storage and prefetch of historical running information when encountering an eviction, and a transmission width of the cache queue may be 16 bytes (byte, B). The write cache is of a cache structure, and may be configured to manage a write request. For example, four evictions from the cache queue may trigger write to the write cache once, and an amount of data written once may be 64B. The read cache is of a cache structure, and may be configured to manage a read request. The read cache may initiate read when encountering a new cache line (cache line). An amount of data read once may be 64B, and one time of read may trigger four times of prefetch. The address translation unit is of a table structure, may be a mini translation lookaside buffer (mini translation lookaside buffer, mini-TLB), and may be configured to manage address translation. When a page table is missing, the mini-TLB may obtain a corresponding page table from a primary TLB and/or a secondary TLB. The prefetch cache is of a cache structure, and may be configured to manage a prefetch request and is responsible for high-order conversion and filtering and the like.

In the foregoing write and read processes of the second processing core, the historical running information written into the system memory is first collected to the cache queue and then transferred to the write cache, that is, the historical running information is written through two-level caching, thereby balancing external and internal processing bandwidths of the memory. In addition, the second processing core may write the historical running information collected in the cache queue into the system memory through stream write (stream write), thereby improving write performance.

Optionally, the operating system kernel may further release the storage space when processing of the periodic service is completed. In an example, when the periodic service runs on the first processing core and is not migrated, the operating system kernel may release the storage space when the first processing core completes processing of the periodic service. In another example, when the periodic service is migrated from the first processing core to the second processing core, the operating system kernel may release the storage space when the second processing core completes processing of the periodic service.

For ease of understanding, the following uses an example in which each period of the periodic service is a frame to describe a procedure of software involved in the foregoing method process performed by the service processing apparatus. The software may include an application and an operating system kernel, and the application may be an application that triggers the periodic service. Optionally, the application may be a predefined critical application.

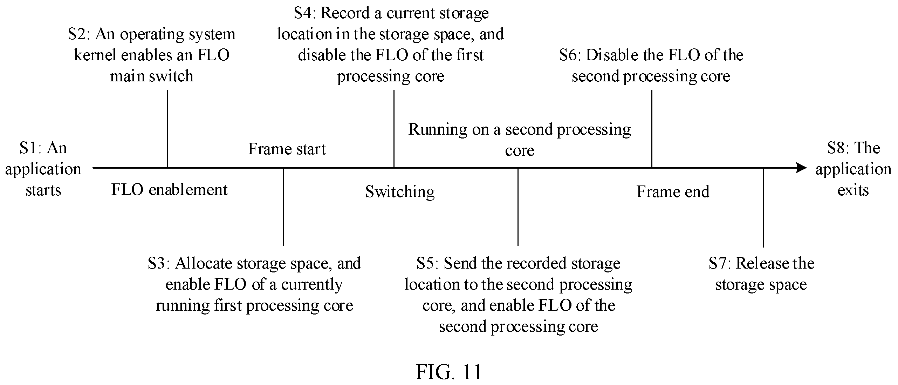

For example, as shown in FIG. 11, the software may specifically include the following procedure: S1: An application starts. S2: An operating system kernel identifies a process of the application, and enables a frame learning optimization (frame learning optimization, FLO) main switch, where the FLO refers to the solution provided in this application. S3: When a periodic service is started (which is alternatively referred to as frame start), the operating system kernel allocates storage space, and enables FLO of a currently running first processing core, so that the first processing core runs a first-period service, obtains corresponding historical running information at a location of mark information, and stores the historical running information in the storage space, where the mark information is used to mark one or more subservices. S4: When the periodic service is migrated to a second processing core (that is, switching occurs), the operating system kernel records a current storage location in the storage space, and disables the FLO of the first processing core. S5: The operating system kernel sends the recorded storage location to the second processing core, and enables FLO of the second processing core, so that the second processing core obtains the historical running information from the storage space based on an FLO function and runs a second-period service, and the second processing core may further obtain historical running information of one or more subservices in the second-period service and update the storage space. S6: When processing of the periodic service is completed (which is alternatively referred to as frame end) or the one or more subservices end, the operating system kernel disables the FLO of the second processing core: S7: The operating system kernel releases the storage space. S8: The application exits.

In addition to being applied to the periodic service provided above, the solution in this embodiment of this application may be further applied to another service having a plurality of periods or a scenario in which cyclic processing is required. Duration of each of the plurality of periods or duration of each cycle processing may be longer or shorter than duration of the frame, the TTI, and the time slice provided above. The duration of each period is not specifically limited in embodiments of this application. In an example, the solution in this embodiment of this application may be further applied to a wireless communication scenario. For example, a user management function in wireless communication is usually triggered by a periodic event or an emergency event. The periodic event may include a TTI level and a 10 ms+ level. When the user management is performed, data of a same type of user usually needs to be cyclically processed. The cyclically processed data may include but is not limited to a measurement feedback, a scheduling result, a service requirement, or the like.

In this embodiment of this application, the at least one processing core may be configured to run the first-period service in the periodic service and obtain the historical running information corresponding to the one or more subservices, the memory may be configured to store the historical running information, and the at least one processing core may be further configured to run the second-period service in the periodic service based on the historical running information, where the first-period service and the second-period service are respectively in the first period and the second period in the plurality of periods. Different periods of the periodic service are similar, so that the memory stores the historical running information corresponding to the one or more subservices in the first-period service, and the at least one processing core obtains required running information from the memory when running the second-period service, thereby reducing a cache miss rate of the at least one processing core during processing of the second-period service, improving prediction accuracy and IPC (instructions per clock), and improving running efficiency of the service.

The foregoing mainly describes the solutions provided in embodiments of this application from a perspective of interaction between the at least one processing core and the memory in the service processing apparatus. It may be understood that, to implement the foregoing functions, the service processing apparatus includes hardware structures and/or software modules corresponding to the functions. A person skilled in the art should be easily aware that, in combination with units and algorithm steps of the examples described in embodiments disclosed in this specification, this application may be implemented by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the service processing apparatus is divided into functional modules based on the foregoing method examples. For example, each functional module corresponding to each function may be obtained through division, or two or more functions may be integrated into one module. The integrated module may be implemented in a form of hardware, or may be implemented in a form of a software functional module. It should be noted that, in embodiments of this application, division into the modules is an example, and is merely logical function division. During actual implementation, another division manner may be used. An example in which each functional module is obtained through division based on each corresponding function is used below for description.

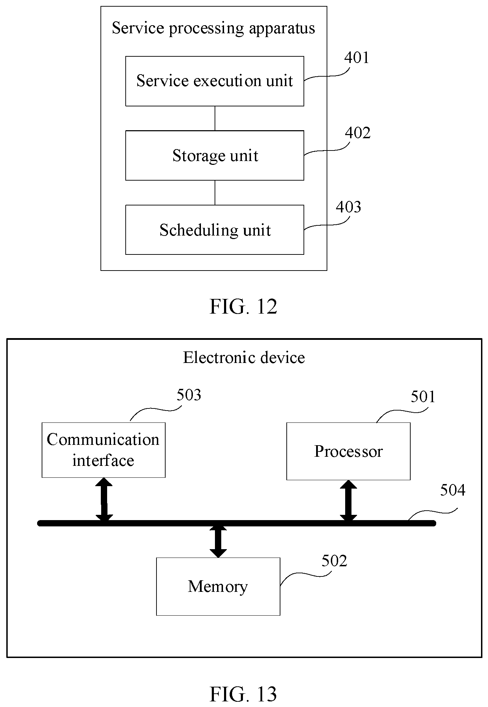

FIG. 12 is a diagram of a structure of a service processing apparatus according to an embodiment of this application. The apparatus includes a service execution unit 401 and a storage unit 402. The service execution unit 401 may be configured to support the apparatus in driving at least one processing core to perform S301 and S303 in the foregoing method embodiments. The storage unit 402 may be configured to support the apparatus in performing S302 in the foregoing method embodiments. The apparatus further includes: a scheduling unit 403, configured to support the apparatus in performing S304 and steps of allocating storage space to a periodic service by using configuration information, releasing the storage space when processing of the periodic service is completed, determining one or more subservices in the periodic service, and the like in the foregoing method embodiments. All related content of each step involved in the foregoing method embodiments may be referenced to a function description of a corresponding functional module, and details are not described herein again in embodiments of this application. The foregoing units may exist in a form of software, hardware, or a combination thereof. For example, if a unit exists in a form of software, the unit may be a software unit located in an operating system kernel running on a processing core or another software drive unit of a processing core. If a unit exists in a form of hardware, the unit may be some functional hardware in a processing core, and may include a digital logic circuit, a memory/cache circuit, or another circuit. This is not limited in embodiments. It may be understood that all related content of each step involved in the foregoing method embodiments may be referenced to a function description of a corresponding functional module, and details are not described herein again in embodiments of this application.

In another embodiment of this application, an electronic device is provided. As shown in FIG. 13, the electronic device includes a processor 501 and a memory 502. The memory 502 is configured to store computer instructions, and the processor 501 is configured to execute the computer instructions, so that the electronic device implements a plurality of steps in the method embodiments provided above. The electronic device further includes a communication interface 503 and a bus 504. The processor 501, the memory 502, and the communication interface 503 are coupled through the bus 504. The communication interface 503 may be configured to support the electronic device in performing communication.

In several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed.

The units described as separate parts may be or may not be physically separate, and parts displayed as units may be one or more physical units, that is, may be located in one place, or may be distributed on different places. Some or all of the units may be selected based on actual requirements to achieve the objectives of the solutions of embodiments.

If the integrated unit is implemented in a form of a software functional unit and is sold or used as an independent product, the integrated unit may be stored in a readable storage medium. The readable storage medium may include any medium that can store program code, for example, a USB flash drive, a removable hard disk, a read-only memory, a random access memory, a magnetic disk, or an optical disc. Based on such an understanding, the technical solutions in embodiments of this application essentially, or the part contributing to the conventional technology, or all or some of the technical solutions may be embodied in a form of a software product.

In another embodiment of this application, a readable storage medium is further provided. The readable storage medium stores computer-executable instructions. A device (which may be a single-chip microcomputer, a chip, or the like) or a processor performs the steps in the foregoing method embodiments.

In still another embodiment of this application, a computer program product is further provided. The computer program product includes computer instructions, and the computer instructions are stored in a readable storage medium. At least one processor of a device may read the computer instructions from the readable storage medium, and the at least one processor executes the computer instructions to enable the device to perform the steps in the foregoing method embodiments.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A service processing apparatus, wherein the apparatus comprises:
at least one processing core, configured to run a first-period service in a periodic service and obtain historical running information corresponding to one or more subservices in the first-period service, wherein the periodic service has a plurality of periods, and the first-period service is in a first period in the plurality of periods; and
a memory, configured to store the historical running information, wherein
the at least one processing core is further configured to run a second-period service in the periodic service based on the historical running information, wherein the second-period service is in a second period in the plurality of periods.

2. The apparatus according to claim 1, wherein the second period is adjacent to the first period.

3. The apparatus according to claim 1 or 2, wherein each of the plurality of periods comprises at least one of the following: a transmission time interval TTI, a frame, or a time slice.

4. The apparatus according to any one of claims 1 to 3, wherein the first-period service and the second-period service comprise the one or more same subservices.

5. The apparatus according to any one of claims 1 to 4, wherein
the at least one processing core is further configured to determine the one or more subservices in the periodic service.

6. The apparatus according to any one of claims 1 to 5, wherein the historical running information comprises at least one of the following: branch history information, an instruction trace, a data trace, cache cold/hot information, page table history information, or quality of service QoS information.

7. The apparatus according to any one of claims 1 to 6, wherein the memory comprises at least one of the following: an on-chip dedicated memory, an on-chip shared cache, or an off-chip memory.

8. A service processing apparatus, wherein the apparatus comprises:
a service execution unit, configured to drive at least one processing core to run a first-period service in a periodic service and obtain historical running information corresponding to one or more subservices in the first-period service, wherein the periodic service has a plurality of periods, and the first-period service is in a first period in the plurality of periods; and
a storage unit, configured to store the historical running information in a memory, wherein
the service execution unit is further configured to drive the at least one processing core to run a second-period service in the periodic service based on the historical running information, wherein the second-period service is in a second period in the plurality of periods.

9. The apparatus according to claim 8, wherein the second period is adjacent to the first period.

10. The apparatus according to claim 8 or 9, wherein each of the plurality of periods comprises at least one of the following: a transmission time interval TTI, a frame, or a time slice.

11. The apparatus according to any one of claims 8 to 10, wherein the first-period service and the second-period service comprise the one or more same subservices.

12. The apparatus according to any one of claims 8 to 11, wherein the apparatus further comprises:
a scheduling unit, configured to determine the one or more subservices in the periodic service.

13. The apparatus according to claim 12, wherein
the scheduling unit is further configured to generate configuration information, wherein the configuration information is used to allocate storage space in the memory to the periodic service; and
the storage unit is further configured to store the historical running information in the storage space based on the configuration information.

14. The apparatus according to claim 13, wherein
the scheduling unit is further configured to: when the second-period service is switched from a first processing core to a second processing core, send indication information to the service execution unit, wherein the indication information indicates the storage space; and
the service execution unit is configured to drive, based on the indication information, the second processing core to obtain the historical running information from the storage space.

15. The apparatus according to claim 13 or 14, wherein
the scheduling unit is further configured to release the storage space when processing of the periodic service is completed.

16. The apparatus according to any one of claims 8 to 15, wherein the historical running information comprises at least one of the following: branch history information, an instruction trace, a data trace, cache cold/hot information, page table history information, or quality of service QoS information.

17. The apparatus according to any one of claims 8 to 16, wherein the memory comprises at least one of the following: an on-chip dedicated memory, an on-chip shared cache, or an off-chip memory.

18. A service processing method, wherein the method comprises:
running a first-period service in a periodic service and obtaining historical running information corresponding to one or more subservices in the first-period service, wherein the periodic service has a plurality of periods, and the first-period service is in a first period in the plurality of periods;
storing the historical running information in a memory; and
running a second-period service in the periodic service based on the historical running information, wherein the second-period service is in a second period in the plurality of periods.

19. The method according to claim 18, wherein the second period is adjacent to the first period.

20. The method according to claim 18 or 19, wherein each of the plurality of periods comprises at least one of the following: a transmission time interval TTI, a frame, or a time slice.

21. The method according to any one of claims 18 to 20, wherein the first-period service and the second-period service comprise the one or more same subservices.

22. The method according to any one of claims 18 to 21, wherein the method further comprises:
determining the one or more subservices in the periodic service.

23. The method according to claim 22, wherein the method further comprises:
generating configuration information, wherein the configuration information is used to allocate storage space in the memory to the periodic service, wherein
storing the historical running information in the memory comprises: storing the historical running information in the storage space based on the configuration information.

24. The method according to claim 23, wherein the method further comprises:
when the second-period service is switched from a first processing core to a second processing core, sending indication information to the second processing core, wherein the indication information indicates the storage space; and
obtaining, by the second processing core, the historical running information from the storage space based on the indication information, wherein
running the second-period service in the periodic service based on the historical running information comprises: running, by the second processing core, the second-period service in the periodic service based on the historical running information.

25. The method according to claim 23 or 24, wherein the method further comprises:
releasing the storage space when processing of the periodic service is completed.

26. The method according to any one of claims 18 to 25, wherein the at least one piece of historical running information comprises at least one of the following: branch history information, an instruction trace, a data trace, cache cold/hot information, page table history information, or quality of service QoS information.

27. The method according to any one of claims 18 to 26, wherein the memory comprises at least one of the following: an on-chip dedicated memory, an on-chip shared cache, or an off-chip memory.

28. An electronic device, wherein the electronic device comprises a processor and a memory, the memory is configured to store computer instructions, and the processor is configured to execute the computer instructions, so that the electronic device implements the service processing method according to any one of claims 18 to 27.

29. A readable storage medium, wherein the readable storage medium stores computer instructions, and when the computer instructions are run on a device, the device is enabled to perform the service processing method according to any one of claims 18 to 27.

30. A computer program product, wherein the computer program product comprises computer instructions, and when the computer instructions are run on a device, the device is enabled to perform the service processing method according to any one of claims 18 to 27.
